# EUROPEAN PATENT APPLICATION

(11) **EP 3 984 372 A1**
(43) Date of publication of application: **20.04.2022**
(21) Application number: 20201894.1
(22) Date of filing: 14.10.2020
(51) Int. Cl.: A23J 1/10, A23K 10/26, A23K 20/142, A23K 50/00, B02C 13/12, A23J 3/30, A23J 3/34

(54) **IMPROVED METHOD FOR PRODUCING HIGHLY DIGESTIBLE HYDROLYZED KERATINACEOUS MATERIAL**

(71) Applicant: Tessenderlo Group NV, 1050 Brussels (BE)
(72) Inventor: FILLIERES, Romain, 1050 Brussels (BE)
(74) Representative: Hoyng Rokh Monegier B.V.

(57) **Abstract**

The invention relates to a method for producing highly digestible, partly hydrolyzed keratinaceous material, preferably from feathers, hair, wool, hooves or nails, comprising the steps of (1) hydrolyzing keratinaceous material in the presence of water, in a hydrolyzer with heat and at a pressure between about 2 bar and about 100 bar to obtain a partly hydrolyzed keratinaceous material; (2) pre-drying the partly hydrolyzed keratinaceous material of step (1) to obtain a semi-dried partly hydrolyzed keratinaceous material having a solids content of about 50wt% or higher, preferably between 50-85wt%; and (3) concurrently drying and grinding the semi-dried partly hydrolyzed keratinaceous material of step (2) in an air turbulence mill, at about atmospheric pressure to obtain dried partly hydrolyzed keratinaceous material; wherein preferably steps (2) and (3) are carried out such that the drop in pepsin and/or ileal digestibility caused by steps (2) and (3) is less than 10%, and/or the pepsin and ileal digestibility of the dried partly hydrolyzed keratinaceous material is higher than respectively 75% and 80%; wherein the resultant dried partly hydrolyzed keratinaceous material comprises at least partly insoluble material, and wherein the average particle size of the dried partly hydrolyzed keratinaceous material (d50) leaving the air turbulence mill is between 20 µm and 0.7 mm and the d90 is below 1 mm as measured with laser diffraction using a dry powder Beckman Coulter particle size analyzer.

## Description

### FIELD OF THE INVENTION

The present invention relates to an improved method for producing highly digestible hydrolyzed keratinaceous material, such as feather meal or meal from hair.

### BACKGROUND OF THE INVENTION

Animal feathers, hair, wool, hooves, nails and the like are a source of keratinaceous material. Such keratinaceous material, which is generally a by-product from poultry, pigs, cattle, sheep and the like is high in protein content but much of the protein is indigestible as such, e.g. as low as 20% only of the protein is digestible. Poultry feathers typically contain approximately 80 to 90% protein in the form of ß-keratin. Keratin contains a relatively high amount of cysteine that results in cross-linking in the protein. The high degree of cross-linking with (di)-sulfide bridges is the reason why much of the protein in for example feathers is indigestible. Keratin must hence be cleaved before its protein content can be digested by animals (McCasland and Richardson 1966, Poult. Sci., 45:1231-1236; Moran et al. 1966 Poult. Sci., 45: 1257-1266). Hydrolyzed feathers can therefore provide a valuable source of digestible proteins and amino acids. Accordingly feather hydrolysate (i.e. hydrolyzed feathers) can be utilized in a numbers of ways, such as in animal feed, pet food and aqua feed.

Methods for processing feathers or hair to increase digestibility and to allow their use as a protein source for feeding poultry and livestock are known in the art. Generally, such methods involve using hydrolysis to break the sulfide bridges in the keratinaceous proteins and incorporating the resulting hydrolyzed proteins into feeds. The commonly used methods of processing keratin-containing stock are subdivided into 1) hydrothermal and pressurized treatment methods, 2) acid, alkaline and/or enzymatic hydrolysis methods or 3) combinations thereof.

Several methods for producing partly hydrolyzed keratinaceous material such as feather meal are known in the art; including US5772968, US4286884, US4172073 and EP 2832236.

The keratinaceous material is generally not completely hydrolyzed to mono-amino acids to improve digestibility. The resultant material from the partial hydrolysis of the keratinaceous material is partly insoluble in water, and may comprise a mixture of liquid (dissolved) and solid (insoluble material). Generally the resulting product is subsequently dried to obtain a solid product. Drying may impact digestibility of the material according to for example the pepsin and/or ileal digestibility test.

Disadvantages of current procedures such as the degradation of heat sensitive amino acids and polypeptides and the relatively low digestibility of the resulting products, have led to continued interest in economical new hydrolysis methods of keratinaceous material which do not require harsh treatment conditions.

WO2015/014860 describes a process wherein the drying step preferably is performed under reduced pressure, in order to keep the drying temperature low, so that little degradation occurs of the feather meal during drying.

WO2017/121897 describes a process wherein the drying step is performed by concurrently drying and grinding partly hydrolyzed keratinaceous material.

### SUMMARY OF THE INVENTION

It is an object of the invention to provide an improved method for producing partly hydrolyzed keratinaceous material with a very high digestibility and having high nutritional value while having good powder properties, in an efficient process.

This object of the invention is achieved by the method for producing digestible, partly hydrolyzed keratinaceous material, preferably from feathers, hair, hooves, wool or nails, comprising the steps of:
(1) hydrolyzing keratinaceous material in the presence of water, in a hydrolyzer with heat and at a pressure between about 2 bar and about 100 bar to obtain a partly hydrolyzed keratinaceous material;
(2) pre-drying the partly hydrolyzed keratinaceous material of step (1) to obtain a semi-dried partly hydrolyzed keratinaceous material having a solids content of about 50wt% or higher, preferably between 50-85wt%; and
(3) concurrently drying and grinding the semi-dried partly hydrolyzed keratinaceous material of step (2) in an air turbulence mill, at about atmospheric pressure to obtain dried partly hydrolyzed keratinaceous material;
wherein preferably steps (2) and (3) are carried out such that the drop in pepsin and/or ileal digestibility caused by steps (2) and (3) is less than 10%, and/or the pepsin and ileal digestibility of the dried partly hydrolyzed keratinaceous material is higher than respectively 75% and 80%;
wherein the resultant dried partly hydrolyzed keratinaceous material comprises at least partly insoluble material, and wherein the average particle size of the dried partly hydrolyzed keratinaceous material (d50) leaving the air turbulence mill is between 20 µm and 0.7 mm and the d90 is below 1 mm as measured with laser diffraction using a dry powder Beckman Coulter particle size analyzer.

It is a further object of the invention to provide a highly digestible partly hydrolyzed keratinaceous material with an improved nutritional value for feed applications.

These, and additional aspects of the present invention are discussed below.

The present inventors have found that the digestibility of partly hydrolyzed keratinaceous material such as feather meal significantly decreases upon drying when conventional dryers (such as disc dryers, vacuum disc dryer, hot air dryers with long residence times and the like) are used. In particular, it was surprisingly found that the decrease in digestibility exhibits a non-linear relationship with the decrease of the moisture content of the partly hydrolyzed keratinaceous material being dried by conventional dryers. The digestibility remains substantially non-impacted for a large part of the drying phase, and rapidly decreases during the end-phase of drying. Hence it was found to be possible to remove significant amounts of moisture from the material using conventional dryers (such as disc dryers, vacuum disc dryer, hot air dryers with long residence times and the like) with no or minimal impact on the digestibility, provided that drying is timely stopped and that the residual amount of moisture removal is done employing an air turbulence mill.

The process of the present invention has a number of advantages. Pre-drying before step (3) of the process allows the removal of the majority of the moisture content by means of conventional and more economical drying techniques when compared to concurrent drying and grinding in an air turbulence mill. However, the combination of steps (2) and (3) of the present invention advantageously still results in the desirable digestibility and particle size properties characteristics compared to drying processes wherein drying is exclusively performed by concurrent drying and grinding in an air turbulence mill.

The process of the present invention has the advantage that existing, conventional lines, where drying is done in conventional dryers (i.e. surface contact dryers also referred to as agitated contact dryers such as rotary disc dryers, rotary paddle dryers, rotary tube bundle dryers, drum dryers, agitated pan dryers and the like and operated at atmospheric conditions or under vacuum , or a hot air dryer such as a fluidized bed dryer, a ring type dryer, a rotating drum dryer, and/or a belt dryer, preferably a disc dryer operating at atmospheric conditions or under vacuum) can be easily retrofitted. Indeed, instead of completely replacing the existing drying equipment of such conventional lines, it is sufficient to add one air turbulence mill to complete the drying step. If needed, for example to maintain the drying capacity, more than one air turbulence mill can be added to the existing drying equipment. It is thus not necessary to replace the entire existing drying equipment of such conventional lines by a number of air turbulence mills to retain the same drying capacity.

Furthermore, since only the final part of moisture removal is done by the air turbulence mill, a smaller capacity and thus amount (or size) of air turbulence mills is required than when the complete drying step is carried out by air turbulence milling. Retrofitting existing conventional lines is thus quicker, more simplified and more economical using the method of the present invention.

Further, the efficient drying of step (3) in a short time results in a product with excellent quality attributes, like for example a pepsin digestibility of preferably 80% or higher or even 82% or higher like for example 85% or higher, and an ileal digestibility of over 85%, or even over 90%, such as for example 92% or higher. Furthermore, a reduced total drying time is possible versus 60-90 min used in a vacuum disc dryer as described in WO2015/014860.

As will be understood by the skilled person in light of the present disclosure, steps (2) and (3) are different and are carried out employing different means to increase the solids content, such as by different drying technologies

The process of the present invention has also the additional benefit of mitigating significantly the risk of microbiological contamination of the dried product with Salmonella and the like. The absence of dead zones in the air turbulence mill due to the turbulence created by the high rotation speed of the rotor and the flow of gas and the easy possibility of increasing - if necessary - the temperature of the flow of gas during a production run are important factors to avoid product buildup or cold spots and thus prevents and mitigates microbiological contaminations.

The present invention further relates to a method of retrofitting a feather meal production line (or a production line for other types of keratinaceous material) comprising adding an air turbulence mill subsequent to the drying equipment of said production line, wherein said line comprises equipment for hydrolyzing feathers and drying equipment for drying hydrolyzed feathers, said drying equipment being one or more of a disc dryer, a vacuum disc dryer, a fluidized bed dryer, a belt dryer, a hot air dryer with long residence time and the like.

In another aspect the present invention relates to a keratinaceous material processing line, such as a feather meal line comprising:
(i) a hydrolyzer;
(ii) a conventional dryer (surface contact dryers also referred to as agitated contact dryers such as rotary disc dryers, rotary paddle dryers, rotary tube bundle dryers, drum dryers, agitated pan dryers and the like and operated at atmospheric conditions or under vacuum, or a hot air dryer such as a fluidized bed dryer, a ring type dryer, a rotating drum dryer, and/or a belt dryer, preferably a disc dryer operating at atmospheric conditions or under vacuum); and
(iii) an air turbulence mill;
wherein the hydrolyzer and the conventional dryer are arranged such that at least part of, preferably all of, the output of the hydrolyzer can be fed to the conventional dryer, and wherein the conventional dryer and the air turbulence mill are arranged such that at least part of, preferably all of, the output of the conventional dryer can be fed to the air turbulence mill.

Such a processing line is advantageous not only in retrofitted plants, but also in large feather processing plants. For example, large processing plants having an hourly throughput of 10 ton or more would require a number of air turbulence mills to be able to dry all the product, which may be a disadvantage in view of investment costs. The combination of a disc dryer and only one or two air turbulence mills may be cost effective, because of lower investment costs, while still allowing high quality feather meal to be produced..

### DETAILED DESCRIPTION OF THE INVENTION

The term "about" means plus or minus 20%, preferably plus or minus 10%, more preferably plus or minus 5%, most preferably plus or minus 2%.

The term "keratinaceous" also encompasses the term "keratinous", means all material having a high keratin content such as feathers, hooves, wool, nails, hair and the like.

The term "keratin hydrolysate" as used herein refers to the resultant product following the hydrolysis of a material comprising keratin.

### Raw materials

The keratinaceous material used in the present invention preferably comprises feathers, hair, wool, hooves or nails. Feathers are by-products from poultry (chicken, turkey, duck and the like), and hair and wool is a by-product from pigs, cattle, sheep and the like. Hooves or nails can originate from a variety of animal sources and may be used in ground form as a source of keratinaceous material.

In a preferred embodiment, feathers are used as keratinaceous material as this material is continuously available in substantial amounts, such that an industrial plant producing keratinaceous material can be on stream continuously.

Advantageously, keratinaceous material produced in accordance with a method of the present invention may provide a valuable source of protein and/or source of amino acids in animal feed. For example, keratinaceous material can provide a source of one or more of the following amino acids: methionine, cysteine, lysine, threonine, arginine, isoleucine, leucine, valine, histidine, phenylalanine, glycine, serine, proline, alanine, aspartic acid, tyrosine, tryptophan and glutamic acid.

The keratinaceous material for use in the present invention preferably has a high protein content (generally more than 70 wt% of the dry substance), comprising at least 17 amino acids. The protein content normally is determined by measuring the total amount of nitrogen, and multiplying said total nitrogen content with the so-called Jones factor of 6.25. The result is the theoretical amount of protein. Generally, feathers comprise between 70-90% protein on solids; the amount of solids in raw feathers collected from a slaughterhouse generally is about 30 wt%. Feather meal generally contains about 72 to about 87 wt% protein, assuming less than 8 wt% moisture.

In an embodiment of the invention blood of slaughtered animals, such as whole blood, clotted blood (e.g. steam coagulated blood), dried blood meal, semi-dried blood meal or other blood fractions may also be processed together with the keratinaceous material.

The blood product (such as whole blood, clotted blood (e.g. steam coagulated blood), dried blood meal, semi-dried blood meal or other blood fractions) may be mixed with the raw feathers, or other keratinaceous material, before the hydrolysis step and hydrolyzed and dried according to the process of the present invention to obtain meal suitable for use as food or feed product. For example, the blood product (such as whole blood, clotted blood (e.g. steam coagulated blood), dried blood meal, semi-dried blood meal or other blood fractions) and the feathers may be introduced in the hydrolyzer via separate inlets, and mixed and hydrolyzed in the hydrolyzer.

Additionally or alternatively, the blood product (such as whole blood, clotted blood (e.g. steam coagulated blood), dried blood meal, semi-dried blood meal or other blood fractions) may be combined with the wet partly hydrolyzed keratinaceous material obtained in step (1) before being submitted to step (2).

Additionally, or alternatively, in accordance with preferred embodiments of the invention, the blood product (such as whole blood, clotted blood (e.g. steam coagulated blood), dried blood meal, semi-dried blood meal or other blood fractions) may be combined with the semi-dried partly hydrolyzed keratinaceous material obtained in step (2) before entering the air turbulence mill of step (3).

The blood product is preferably coagulated blood obtained from raw full blood which is first coagulated by direct contact and mixing with live steam and further centrifuged to mechanically remove the blood water from the coagulated blood. Alternatively, it is possible to use blood that is not coagulated after slaughter of the animals. Blood may be treated with conventional anticoagulants such as EDTA and citrate. Alternatively, red blood cells are lysed by osmotic shock, pH shock and the like. The blood may then be further treated according to the methods described for keratinaceous material, wherein if the blood is not coagulated, it is preferably mixed with the raw keratinaceous material and submitted to step (1) of the process described herein.

In case blood is used in combination with keratinaceous material, suitable amounts of keratinaceous material to blood that may be used together with feathers or other keratinaceous material include a ratio between 1 to 10, preferably from 1.3 to 3. Generally, the relative amounts based on dry matter will be about 10-50 wt% of blood product and 50-90 wt% of keratinaceous material, preferably 25-45 wt% blood product and 55-75 wt% keratinaceous material.

### Step (1) - Hydrolysis process

The partial hydrolysis of the keratinaceous material in step (1) of the process of the invention, in a preferred process will be the following: (a) loading of a continuous or discontinuous vertical or horizontal hydrolyzer with raw feathers or other keratinaceous material, optionally with raw blood, (in case of raw feathers, these have e.g. between 55% and 70% moisture; which moisture generally comes from the slaughterhouse as the birds are scalded in hot water before plucking, plucked feathers are then conveyed in water to a centrifuge or press before discharge in the receiving bin), (b) heating up of the hydrolyzer by means of steam jackets (and/or injection of direct steam), pressure build up due to water evaporation and/or direct steam injection, maintaining pressure at about 2 bar to about 100 bar, preferably between about 2 and about 15 bar, and more preferably between 2 to 8 bars during 5 seconds up to 240 min, preferably between 90 seconds up to 30 min, more preferably between 5 min to 40 min and most preferably between 10 to 30 min, (c) depressurizing and discharging to a drying section. A lower pressure generally requires a longer treatment time, while high pressures require shorter treatment times to obtain a suitable hydrolysis.

The raw keratinaceous material may be milled or crushed to reduce the size before loading in the hydrolyzer. Generally, size reduction for feathers and hair of pigs or cattle is not required.

The wet raw keratinaceous material generally will have a moisture content of between about 30 and about 80% (% moisture relative to the total weight of the keratinaceous material plus moisture) when supplied to the hydrolyzer, preferably the moisture content is about 50 wt% or more, and commonly around about 70% . It is preferred to use less than 75 wt% of moisture (i.e. less than 3 parts water on 1 part of dry substance keratinaceous material), because the added water needs to be removed, and takes energy to heat in the hydrolyzer. Therefore, a preferred amount of water is about 65 wt% or less (at most about 2 parts of water relative to 1 part of dry substance of keratinaceous material, preferably feathers).

The hydrolyzer generally works at a pressure of about 15 bar or lower, preferably 10 bar or lower, as higher pressure is increasingly costly. However, pressures up to 100 bar can be used depending on the type of equipment used. The pressure generally is about 2 bar or higher. Higher pressure is preferred to increase the degree and speed of hydrolysis. Hence, the pressure preferably is about 4 bar or higher, and even more preferable, about 6 bar or higher. Generally, the pressure will be about 9 bar or lower. The pressure is given as bar absolute.

The hydrothermal hydrolysis reaction is breaking up peptide bonds by the action of water, temperature and pressure. Generally, no acid or base is present, although some may be present in the keratinaceous material coming from the slaughterhouse. Generally small amounts of added reagents are possible to use such as calcium hydroxide or high temperature resistant enzymes like Cibenza, Valkerase enzyme preparations. It is preferred to have a hydrolysis reaction with only water/steam as the active reagent.

The hydrolysis in step (1) will be performed in a hydrolyzer, which is generally called a steamhydrolyzer. Such hydrolyzer is essentially a stirred vessel, and may be operated as a batch or continuous process. The hydrolyzer preferably allows a continuous process, and is a stirred tube like vessel, like an extruder or a vertical stirred vessel. The hydrolyzer may be a horizontal hydrolyzer or a vertical hydrolyzer. Stirring preferably is done with a slowly propelling screw type of mixer, paddles or the like.

The hydrolysis step (1) generally will last between about 5 seconds and about 240 min, preferably 90 seconds or longer, and - at a pressure below about 15 bar - generally between about 5 min and about 240 min, preferably between about 10 and about 180 min. Lower pressure generally requires longer reaction times. It is preferred to perform the reaction in such a way, that the residence time in the hydrolyzer will be about 60 min or less, most preferred about 40 min or less.

The steam may be directly injected and/or used for indirect heating . Indirect heating may also be affected with e.g. hot oil coils. Ultimately, the pressure should be as required, and the amount of water preferably is such, that saturated steam is present at the chosen pressure and temperature. Preferably, the amount of steam present is about 200 gram of steam or more per kg of keratinaceous material.

### Step (2) - Pre-drying to a semi-dried product using conventional drying equipment

The partly hydrolyzed keratinaceous material will be pre-dried hereafter according to steps (2) of the present invention using conventional drying equipment.

Conventional drying equipment are referred to in the present invention as surface contact dryers and hot air dryers.

In a surface contact dryers also referred to as agitated contact dryers heat for moisture evaporation is supplied by conduction from heated walls or tubes by means of steam or thermal oil or other fluids. Such dryers comprise rotary disc dryers, rotary paddle dryers, rotary tube bundle dryers, drum dryers, agitated pan dryers and the like and can be operated at atmospheric conditions or under vacuum.

Hot air dryers comprise fluidized bed dryers, ring type dryers, rotating drum dryer, and/or a belt dryers and use a gas stream, generally air (that may be low in oxygen) directly in contact with the wet product.

Alternatively or in combination with the above mentioned conventional drying equipment and in case the hydrolyzer is a batch hydrolyzer, pre-drying can be performed in the hydrolyzer itself and contribute to the reduction of the moisture content.

The residence time in these conventional dryers generally is 1 min or longer, preferably 5 min or longer. The residence time may be up to 2 hr. Disc dryers can have a residence time between 1 or 2 hours, while fluid bed dryers may have a residence time between 10-20 min, and ring type dryers may have even slightly shorter residence times.

In preferred embodiments of the invention, step (2) does not comprise grinding. In embodiments of the invention the average particle size (D50) of the keratinaceous material is reduced by less than 40%, preferably less than 20%, more preferably less than 10% during step (2), most preferably the average particle size (D50) is not significantly altered during step (2).

The product that leaves the hydrolyser generally comprises a large particle range. In particular, it is a mixture of fine and coarse material with a large particle size distribution. Generally, at least 10 wt% of the product consists of particles larger than 2 mm, with some particles up to 1 cm. The product that leaves the hydrolyser, or the press, if water is pressed out of the product leaving the hydrolyser, often comprises 20% or more particles over 2 mm.

Drying generally is done in a number of steps. The first step comprises bringing the mixture leaving the hydrolyzer (which comprises the partly hydrolyzed keratinaceous material of step (1)) to atmospheric pressure, while evaporating part of the water. This water vapor may be further directly oxidized in a thermal oxidizer or condensed, and treated in a waste water treatment plant or the like.

In one preferred embodiment of the invention, the mixture leaving the hydrolyzer (which comprises the partly hydrolyzed keratinaceous material of step (1)), of which part of the water is evaporated because of the reduction in pressure, is subjected to a pressing step before being submitted to the pre-drying step (2). In this step, part of the water from the keratinaceous material is removed, to bring the water content from, for example, about 65 wt% to about 45 wt%.

The water pressed from the keratinaceous material after the hydrolysis step is generally referred to as stick water. The stick water is rich in solubilized proteins that have nutritive value. The stick water may be concentrated by evaporation using as common practice waste heat recovery and further dried by itself using an appropriate drying system and valorized as such, but is generally concentrated and transferred back to the hydrolyzed feathers in order to produce dried feather meal.

In an embodiment of the invention the stick water that may be pressed out from the keratinaceous material after the hydrolysis step is preferably concentrated, and the concentrated solution may be injected into the air turbulence mill separate from the solid keratinaceous material, or mixed back before introducing the keratinaceous material into the air turbulence mill, or into the feed of the dryer used in step 2.

In an alternative, and more preferred embodiment, in the process according to the present invention, the mixture leaving the hydrolyzer that has been depressurized to atmospheric pressure, while still at elevated temperature is directly submitted to step (2) as described herein.

The drying process is very important for the final quality of the keratinaceous material such as feather meal. It appears that common drying techniques cause the digestibility to be reduced. In particular, it was surprisingly found that the decrease in digestibility of the partly hydrolyzed keratinaceous material exhibits a non-linear relationship with the decrease of the moisture content of the partly hydrolyzed keratinaceous material being dried by conventional dryers. The digestibility remains substantially non-impacted for a large part of the drying phase, and rapidly decreases during the end-phase of drying. Hence it was found to be possible to remove significant amounts of moisture from the material using conventional dryers as described herein with no or minimal impact on the digestibility, provided that drying is timely stopped and the residual moisture removal is done employing an air turbulence mill.

In accordance with preferred embodiments of the present invention, step (2) comprises drying of the partly hydrolyzed keratinaceous material of step (1) employing conventional drying equipment as described herein.

In preferred embodiments of the invention, step (2) comprises pre-drying the partly hydrolyzed keratinaceous material of step (1) to a solids content of at least about 55 wt.%, preferably at least about 60 wt.%, more preferably at least about 65 wt.%, even more preferably at least about 70 wt.%, yet even more preferably at least about 75 wt.% and yet even more preferably at least about 80 wt.%.

In preferred embodiments of the invention step (2) comprises pre-drying the partly hydrolyzed keratinaceous material of step (1) to a solids content of about 76wt.%, or 77 wt.%, or 78 wt.%, or 79 wt.%, or 80 wt.%, or 81 wt.%, or 82 wt.%, or 83 wt.%, or 84 wt.%, or 85 wt.%, or 86 wt.%, or 87 wt.%, or 88 wt.%, or 89 wt.%, or 90 wt.%.

In preferred embodiments of the invention, step (2) comprises pre-drying the partly hydrolyzed keratinaceous material of step (1) to a solids content of no more than 90 wt.%, preferably no more than 85 wt.%, more preferably at most up to the point that the digestibility of the semi-dried partly hydrolyzed keratinaceous material will start to decrease significantly if dried further with conventional drying equipment.

In preferred embodiments of the invention, step (2) comprises pre-drying the partly hydrolyzed keratinaceous material of step (1) to at least a solids content of 50-80wt.%, more preferably about 55-80 wt.%, more preferably 60-80 wt.%, more preferably 65-80wt.%.

Preferably, the temperature of the keratinaceous material during step (2) is kept at about 90 °C or lower, preferably at about 80 °C or lower, and more preferably at about 75 °C or lower, such as for example between about 60 to about 75 °C, or for example at a temperature of about 70 °C or lower. Hence, preferably step (2) comprises pre-drying the partly hydrolyzed keratinaceous material of step (1) employing a disc dryer operating at atmospheric pressure or a vacuum disc dryer wherein the temperature of the keratinaceous material during step (2) is kept at about 90 °C or lower, preferably at about 80 °C or lower, and more preferably at about 75 °C or lower.

In case of use of surface contact dryers also referred to as agitated contact dryers where heat for moisture evaporation is supplied by conduction from heated walls or tubes by means of steam or thermal oil or other fluids such as a rotary disc dryer, a rotary paddle dryer, a rotary tube bundle dryer, a drum dryer, an agitated pan dryers and the like operating at atmospheric conditions or under vacuum it will be necessary in order to reduce the drying effect to either increase the flow rate of the wet feed into the dryer and/or decrease the steam pressure or the temperature of the heating fluid in the double envelops and/or increase the rotation speed (throughput of the product) or a combination thereof compared to regular operations when it is use as a sole drying means. Adjusting such operating settings (feed rate, steam pressure, rotation speed) to achieve the desired residual moisture content of the semi-dried product required by step (2) of the present invention are part of the routing capabilities of a skilled person.

Alternatively, step (2) may comprise effective drying of the partly hydrolyzed keratinaceous material in a flow of hot air, such as in a fluidized bed dryer, ring type dryer, rotating drum dryer and the like (herein denoted as "hot air dryer"). In such cases it is important to limit the heat exposure to a minimum compared to regular operations when it is use as a sole drying means. Adjusting such operating settings (feed rate, temperature of air or gas, flow of air or gas) to achieve the desired residual moisture content of the semi-dried product required by step (2) of the present invention are part of the routine capabilities of a skilled person.

### Step (3) - Final drying using an air turbulence mill

The semi-dried product leaving the pre-drying step (2) is preferably directly fed to the air turbulence mill preferably while still at elevated temperature. In such preferable case the moist hot semi-dried product comprises still so much energy that a gas stream which is at ambient temperature can be used to dry the material in an air turbulence mill. The moist semi-dried product generally will have a temperature of about 70 °C or higher, like for example about 80°C or higher, such as between about 70°C and 100 °C. As the keratinaceous material is at atmospheric pressure, the temperature will be about 100°C (depending on the ambient pressure) or less.

In a highly preferred embodiment of the invention, step (3) comprises drying the semi-dried partly hydrolyzed keratinaceous material from step (2) to a residual moisture content of about 10 wt% or less, preferably about 8 wt% or less. Drying to a residual moisture content lower than about 4 wt% generally is not necessary, but would not harm. Drying is most preferably performed to a residual moisture content of about 5-7 wt%. Drying results in a storage stable product. In the preferred embodiment of the invention, the drying of step (3) is performed at atmospheric pressure while forming small particles, such that drying is very efficient. The atmospheric pressure includes slight vacuum, which is often used to aid flow of the gas and transport of the powder. The dry product in the form of small particles is separated from the gas stream, which separation is generally done in one or more cyclones, preferably one cyclone or by means of a bag filter or combinations of both and by means of an air lock rotating valve. The pressure before the mill can be -5 to -8 mbar and after the mill between -30 and -50 mbar.

In one preferred embodiment, the partly hydrolyzed material resulting from step (1) is pre-dried in step (2) with methods allowing limited heat damage to low heat damage, such that the reduction of the digestibility of the partly hydrolyzed keratinaceous material caused by step (2) is limited. Accordingly, the dried partly hydrolyzed keratinaceous material obtained in step (3) is characterized by a pepsin and/or ileal digestibility of more than respectively about 80% and 85%, preferably of more than respectively about 82% and 90%, and more preferably of more than respectively about 85% and 92%. More preferably, steps (2) and (3) are carried out such that the drop in pepsin and/or ileal digestibility caused by steps (2) and (3) is less than 5%. To obtain such material with low heat damage, the inventors of the present invention discovered that the last part of moisture removal from the partly hydrolyzed keratinaceous material is to be carried out by drying with a gas flow while at the same time grinding the material. The present inventors found that further improvement of the in vitro digestibility and material characteristics of keratinaceous material were achievable by using an air turbulence mill, because the small particles that result from the grinding action aid in quickly drying the hydrolyzed material.

Hence, according to the present invention, the partly hydrolyzed material resulting from step (1) is first pre-dried in step (2) as described above and subsequently concurrently dried and ground with a gas stream, generally air (that may be low in oxygen), using an air turbulence mill in step (3) of the process. The air turbulence mill has the benefit of a fast grinding and drying effect, and the use of an air turbulence mill according to the invention results in drying and simultaneously milling or grinding the semi-dried partly hydrolyzed keratinaceous material by introducing the material to dry in a flow of gas, generally air, into a high speed rotor in a confined chamber.

An air turbulence mill generally comprises a chamber (stator) with appropriate inlets and outlets for product and stream(s) of gas in which a rotating member (rotor) is mounted with stacks of impacting devices which rotating member can rotate at high speed. The inner walls of the stator are preferably lined with impacting members, like corrugated sheets, in order to increase the efficiency of the grinding with additional friction and shear forces. The rotor generally is placed vertically relative to the outlet.

Several types of air turbulence mills exist. They are generally referred to as turbulent air grinding mills or vortex air mills. Some of these are also named 'spin driers and grinders', and others also 'flash dryers and grinders'. Spin dryers-and-grinders and flash dryers and grinders basically dry and mill wet product in a very short period of time. The rotor generally is positioned vertically relative to the outlet. The present invention contemplates the use of all of them under the notion of "air turbulence mill". It is preferred to use vertically positioned rotors, as these appeared to use less energy.

Air turbulence mills, such as those known in the art from Atritor (Cell Mill), Hosokawa (Drymeister), Larsson (Whirl flash), Jäckering (Ultra Rotor), Rotormill, Görgens Mahltechnik (TurboRotor) or SPX may be used for drying and grinding in the present invention. Some of such air turbulence mills are described in e.g. US4747550, WO1995/028512 and WO2015/136070.

The air turbulence mill may comprise a classifier, which causes a separation of larger and smaller particles. The use of a classifier allows the larger particles to be returned to the grinder, while smaller particles are left through for further processing. In another embodiment, two or more grades of particulate feather meal are produced, with differing particle sizes and bulk properties by having two outlets out of the classifier.

The drying in the air turbulence mill is performed with a stream of gas (generally air, that may be low in oxygen) into a high speed rotor. The inlet temperature generally ranges between about 20 °C and 500°C, preferably between about 20 °C and 450 °C and even more preferably about 20 °C and 180 °C. The higher end of the temperature may require careful processing and/or may require lower amounts of the heated gas to be used. It would for example be possible to use the heated gas at a temperature of about 450 °C and a second gas stream at room temperature if high gas velocities are required.

The outlet temperature of the air generally is below 100 °C, preferably below 90 °C. The temperature of the inlet-gas may be lower in case the keratinaceous feed has a higher temperature.

The flow of the air generally is about 5 m³/h per kg of fed material or higher, preferably about 10 m³/h per kg fed material. Generally, the amount is about 50 m³/h or less, preferably about 40 m³/h per kg fed material or less. Suitable, most preferred, amounts are for example between 15 and 30, such as between 20-25 m³/h per kg of fed product.

The gas flow can be fed into the mill directly with the feed material, or indirectly, wherein the semi-dried partly hydrolyzed keratinaceous material is fed in one place, and the gas stream is fed into the air turbulence mill separately in one or several other places.

The air turbulence mill used in the present invention preferably comprises a confined chamber (stator) with appropriate inlets and outlets for the product and the stream of gas in which a vertically placed shaft (rotor), mounted with stacks of cutting and impacting devices such as blades, discs, plates and the like, rotates at high speed. The inner walls of the stator can be lined with corrugated sheets in order to increase the efficiency of the grinding with additional friction and shear forces.

The rotor generally rotates with a tip speed of about 10 m/s or higher, more preferably of about 15 m/s or higher, even more preferably of about 20 m/s or higher. In one embodiment, generally, the speed is about 50 m/s or lower, preferably about 30 m/s or lower. A suitable speed is for example about 25 m/s. In another embodiment, which is even more preferred, the tip speed is about 150 m/s or lower, preferably about 100 m/s or lower, and most preferably about 75 m/s or lower. Generally, the tip speed is about 20 m/s or higher, preferably about 30 m/s or higher.

The grinder may produce substantial heat. Furthermore, the incoming semi-dried partly hydrolyzed keratinaceous material may be at a temperature above room temperature. If useful, the gas stream can be heated, for example by direct heating in a gas burner (which also causes the oxygen level to be reduced, which lowers ignition hazard), or by indirect heating through a heat exchange with steam or hot oil.

The air turbulence mill comprises one or more inlets for a gaseous flow. One or more of these gas streams may be heated. In case one stream of gas is heated, it is preferably heated to a temperature of about 50 °C or higher.

The gaseous flow can be introduced in different ways. Generally, the main gas stream is introduced at the bottom of the air turbulence mill. This inlet may be the same inlet as the wet product inlet. In such case, the gas flow is generally used to transport the product. A second gas stream can be used to influence the milling and flow behavior of the mill. In particular in case the product is not easy to transport with a gas flow, it can be introduced in the mill through a screw or pump.

To maintain a high digestibility of the dried partly hydrolyzed material the average residence time in the air turbulence mill is preferably short, like less than 10 sec, preferably below 5 seconds, more preferably below 2 seconds, even more preferably below 1 second. The low average residence time of the material to dry in the mill allows efficient drying while only a relatively small increase in temperature of the keratinaceous material is observed. In case a classifier is used, the average residence time will be higher, but the time that any powder actually is in the grinder remains preferably below 10 sec, and even more preferably below 5 sec.

Preferably concurrently drying and grinding the semi-dried partly hydrolyzed keratinaceous material of step (2) in the air turbulence mill is performed at a temperature such that the keratinaceous material remains at a temperature below about 90 °C, preferably below about 80 °C.

Preferably the temperature of the keratinaceous material coming out of the air turbulence mill is at a temperature range between about 30°C and 90 °C, more preferably between about 40°C and 80 °C, even more preferably between about 45°C and 75 °C.

The gas flow leaves the air turbulence mill, optionally through a classifier, with the dried product. The dry product in the form of small particles is separated from the gas stream, which separation is generally done in one or more cyclones, preferably one cyclone or by means of a bag filter or combinations of both.

It is possible to further classify the resultant powder leaving the cyclone, like for example on a horizontal sieve for screening oversized, large particles and/or for removing dust. It is furthermore possible to produce different grades of hydrolyzed keratinaceous material and or combinations with blood products as described herein, with smaller and larger particle sizes.

Reject of the sieve (oversized particles and/or dust) preferably is reintroduced in the feed for further treatment in the air turbulence mill or may be mixed with the semi-dried partly hydrolyzed keratinaceous material to increase its dry substance prior to being fed to the air turbulence mill (also referred to as "back mixing". Mixing of reject or dry product with the semi-dried material of step (2) can improve the feeding operation and overall efficiency of the drying and grinding of the air turbulence mill.

Preferably, classification is done over a sieve (or other classification device) with the cut off of 1 mm or lower, preferably 800 µm or lower. Classification can for example be done over a sieve with a cut off of 300 µm, 500 µm or 900 µm.

Furthermore, the flow of air entering the air turbulence mill can be adjusted to influence the residence time and/or the size of the particles. For example, the flow of air directly influences the residence time in the chamber and contact time with the milling device; the higher the flow of air the shorter the residence time and therefore the bigger the particles, and vice-versa the lower the flow of air and the smaller the particles. The size of the particles is further influenced by a classifier. The skilled person will be able to balance the air turbulence mill to provide particle sizes as required.

### The resultant dry partly hydrolyzed keratinaceous material (feather meal)

The dried partly hydrolyzed keratinaceous material is further used as a dry product (generally called feather meal when the starting keratinaceous material is feathers), with a moisture content of about 10 wt% or less.

The dried material comprises preferably less than 8% of moisture. Most preferable, the dried material has a moisture content of between 5 and 7 wt%.

The partly hydrolyzed material after drying in step (3) preferably has a pepsin and ileal digestibility of higher than about respectively 80% and 90%, more preferably higher than about respectively 82% and 92%. An even more preferred pepsin digestibility is above 85%.

Even though the hydrolysis step substantially enhances the digestibility, a large portion of the feather meal is insoluble in plain water (demi water). Generally, more than 50 wt% of the feather meal is insoluble, and more generally more than 90% is insoluble.

The drying and grinding in an air turbulence mill of step (3) has the further advantage that the color of the material is a creamy light brown color, which is lighter and more homogeneous than classically dried material. The color of the powder can for example be measured using a Chromameter according to CIE-L^{∗}a^{∗}b color space. The lighter color is characterized by a relatively high (L) value, optionally combined with a relatively high (b) value. The high (L) value indicates the lightness of the powder, while the higher (b) value indicates the distinct yellower color.

Generally, the (L) value of the keratinaceous material is about 50 or higher, preferably 54 or higher, and more preferably about 60 or higher.

Generally, the (b) value will be about 10 or higher, preferably 12 or higher, and more preferably about 14 or higher.

The combined (L) and (b) values preferably are an (L) value higher than 50, and a (b) value higher than 10, higher than 12, or higher than 14. The combined (L) and (b) values more preferably are an (L) value of about 54 or higher, and a (b) value higher than 10, higher than 12, or higher than 14. The combined (L) and (b) values even more preferably are an (L) value of about 60 or higher, and a (b) value higher than 10, higher than 12, or higher than 14.

The dried partly hydrolyzed keratinaceous material resulting from the method according to the present invention is in the form of a powder with powder characteristics preferably such, that the powder has good flow properties, packaging characteristics as well as good dosing characteristics to formulate pet foods and animal feeds.

The digestible keratinaceous powder material obtainable by the method of the present invention, such as feather meal, comprises at least 17 amino acids, preferably at least 18 amino acids, such as cysteine and tyrosine.

Preferably, the amount of cysteine is about 2 wt% or more, more preferably about 3 wt% or more, even more preferably about 4 to about 5 wt% or more relative to the total protein content.

Preferably, the amount of tyrosine is about 1 wt% or more, more preferably about 1.5 wt% or more, even more preferably about 2 to about 3 wt% or more relative to the total protein content.

The dried partly hydrolyzed keratinaceous material obtained in step (3) of the present invention is generally in the form of particles of which more than about 99 wt% is smaller than a few mm, like for example smaller than about 2 mm. Generally, more than about 95 wt% is larger than about 8 µm, in order to have a free flowing powder that can easily be handled and further processed into for example formulated pet foods and animal feeds.

In a preferred embodiment the average particle size (defined as d50; 50% of the volume fraction of the particles is larger, and 50% is smaller), measured by laser diffraction on a Beckman Coulter particle size analyzer using standard software, is between about 20 µm and about 0.7 mm, preferably between about 20 µm and about 500 µm, more preferably between about 50 µm and about 300 µm. For example, the average particle size is about 75 or about 150 µm.

The d90 preferably is below about 1 mm, more preferably below about 0.7 mm. The d10 preferably is above about 10 µm, and more preferably above about 15 µm.

The above described sizes are highly advantageous. Hydrolyzed keratinaceous material which is completely dried using only conventional drying equipment as described herein have at the outlet of the dryer a coarse heterogeneous particle size distribution with particle sizes in average above 2 mm and quite often above 5 mm necessitating further grinding and sieving equipment and therefore additional footprint requirements, additional dust emissions and in general making a less attractive process set up.

The particle size distribution of the dried partly hydrolyzed keratinaceous material of the present invention is relatively homogeneous. For example, the d90 divided by the d10 is about 20 or less, preferably about 15 or less, while the d90 is about 1 mm or lower.

An antioxidant and/or an anticaking agent can be blended into the keratinaceous powder material to improve respectively its oxidation stability and its flowability.

In a preferred embodiment the antioxidant is added and mixed into the semi-dried feed material prior to the air turbulence mill in order to have a homogeneous incorporation and avoid undesired spots and agglomeration if such incorporation was done on the finished powder.

In a preferred embodiment of the invention the dried partly hydrolyzed keratinaceous material has a poured density of about 0.2 g/cm³ or higher, more preferably of about 0.25 g/cm³ or higher, even more preferably about 0.3 g/cm³ or higher. Generally, the poured density will be about 0.6 g/cm³ or lower, like for example about 0.55 g/cm³ or lower.

In a further preferred embodiment of the invention the dried partly hydrolyzed keratinaceous material has a tapped bulk density of about 0.25 g/cm³ or higher, more preferably of about 0.3 g/cm³ or higher and even more preferably 0.35 g/cm³ or higher, more preferably of about 0.4 g/cm³ or higher, even more preferably about 0.45 g/cm³ or higher. Generally, the tapped density will be about 0.7 g/cm³ or lower, like for example 0.65 g/cm³ or lower.

In a further embodiment and contrary to conventional feather meal dried only in conventional drying equipment as described herein, the dried partly hydrolyzed keratinaceous material may be pelletized to increase its density to optimize volume and transport cost.

Before or after step (2) and/or before or after step (3), some amino acids may be added to the partly hydrolyzed keratinaceous material. In particular, it can be useful to add one or more of methionine, lysine, and tryptophan, or digestible proteins containing these amino acids in relatively large amounts, as the amount of these amino acids is relatively low in keratinaceous material.

The dried partly hydrolyzed keratinaceous material can be packed in small bags, big-bags or other bulk containers. The keratinaceous material can be packed and shipped in any kind of Bulk Container, big bag or other container.

The dried partly hydrolyzed keratinaceous material such as feather meal may be used as feed, as feed supplements, such as in pet food and/or in aquaculture feeds. The material may be used in powder form or may be converted to larger dosing units in the form of granules, flakes and the like using conventional processing techniques. The feather meal can be used as carrier for other ingredients, and/or can be used as extender.

When used in the preparation of a feedstuff, the keratinaceous material produced in accordance with the present invention may be used in conjunction with one or more of: a nutritionally acceptable carrier or extender, a nutritionally acceptable diluent, a nutritionally acceptable excipient, a nutritionally acceptable adjuvant or a nutritionally active ingredient. The keratinaceous material may itself be a carrier or extender for other functional ingredients such as flavoring agents, palatants and attractants.

The process of the present invention can be easily applied in conventional feather meal plants, because the air turbulence mill with the optional classifier, the cyclone and the air supply do not occupy much space.

Hence, the present invention also relates to a method of retrofitting a keratinaceous material processing line, such as a feather meal processing line by adding to the existing conventional drying equipment as described herein an air turbulence mill with its ancillary equipment. Preferably the keratinaceous material processing line, such as the feather meal processing line, comprises a hydrolyzer. In accordance with the invention, the air turbulence mill is placed such that at least part of the output of the conventional drying equipment is the input for the air turbulence mill.

In another aspect the present invention relates to a keratinaceous material processing line, such as a feather meal line comprising:
(i) a hydrolyzer;
(ii) a conventional dryer as described herein; and
(iii) an air turbulence mill;
wherein the hydrolyzer and the conventional dryer are arranged such that at least part of, preferably all of, the output of the hydrolyzer can be fed to the conventional dryer, and wherein the conventional dryer and the air turbulence mill are arranged such that at least part, preferably all of the output of the conventional dryer can be fed to air turbulence mill(s).

### MEASUREMENT METHODS

The following methods were used in the examples, and are suitable as methods to measure the parameters stated in the description and the claims:
Weight percentage (wt%) moisture: moist keratinaceous material is dried overnight in a vacuum stove at reduced pressure and with a siccative. The material is weighed before and after the drying step, and the amount of moisture is calculated using the initial measured weight as 100% while assuming that all the volatile material is water.

In a quantitative test the solubility of the keratinaceous material can be performed as follows: 100 g of feather meal is mixed into 1000 mL of water and the mixture is stirred during 15 minutes at 20 °C. The mixture is filtered over a 350 µm filter under pressure. The filtrate and the solids on the filter are dried and their weight measured. In this analysis, one would correct for the moisture content of the materials, i.e. the moisture content of the feather meal should be measured as well. Further, one should correct for the amount of soluble material that remains in the wet solids which are filtered out. Generally, more than 50 wt% of the feather meal is insoluble, and more generally more than 90% is insoluble.

Pepsin digestibility is measured according to ISO 6655 (August 1997) using as per the said mentioned norm a pepsin concentration of 0.02% in hydrochloric acid.

Ileal digestibility (also referred to as Boisen digestibility) is measured according to the methods described by S. Boisen in "Prediction of the apparent ileal digestibility of protein and amino acid in feedstuffs for pigs by in vitro analysis", Animal Feed Science Technology, 51, pp.29-43 (1995) and further described in "In vitro analysis for determining standardized ileal digestibility of protein and amino acids in actual batches of feedstuffs and diets for pigs"; Livestock Science, 309 : pp.182-185 (2007).

The amino acid analysis, lanthionine and de-carboxylated amino acids (like cadaverine, putrescine, or histamine) analysis are performed with standard HPLC methods.

Particle size distribution has been measured with laser diffraction; on a Beckman Coulter particle size analyzer - dry powder system. Standard software of the manufacturer was used. The results are described as d10, d50, d90 etc., which relates to the volume fractions.

The poured and tapped density can be measured by pouring an amount of feather meal in a 100 mL cylinder (diameter 2.5 cm), and measuring the amount of meal present in gram. Tapping is done by placing the beaker on a vibrating surface (0.5 mm vertical vibration; 240 times per minute) for 5 min; and measuring the volume of feather meal. The poured density is calculated as amount of feather meal divided by 100 (g/cm³). The tapped density is the same gram amount divided by the volume measured.

Color measurements are performed with CIE-Lab, according to standard techniques. A Chromameter was used with standard software.

Further modifications in addition to those described above may be made to the materials and methods described herein without departing from the spirit and scope of the invention.

Accordingly, although specific embodiments have been described, the following are examples only and are not limiting upon the scope of the invention.

### EXAMPLES

### EXAMPLE 1

In a batch horizontal hydrolyzer working at 2.7 bar rel. and heated with saturated steam at 7 bars abs. in the shaft and double envelop of the hydrolyzer, feathers from chicken with an average moisture content of 65 wt% were treated under pressure for 25 min. The partly hydrolyzed keratinaceous material was brought to atmospheric pressure through a let-down valve and the material was further pre-dried in the same equipment. A number of production runs were carried out with increasing pre-drying times resulting in residual moisture contents ranging from 51% down to 38%; hence, the products comprised 49wt% hydrolyzed feathers and 51wt% water, resp 62wt% hydrolyzed feathers and 38wt% water.

Samples of a few hundred kilograms of each runs were collected and further concurrently dried and ground in an air turbulence mill (JÄCKERING, model Ultra Rotor III a) at a feed rate of circa 100 kg/h. The air turbulence mill was operated with an inlet gas (air) at a temperature of 160 °C. The amount of gas was between about 15 and 30 m3/hr^{∗}kg. The tip speed of the rotor was between 50 and 60 m/s.

The average residence time of the product in the air turbulence mill was estimated to be less than about 1 sec. During drying and grinding, it was estimated that the product did not reach temperatures higher than about 80 °C, because the temperature of the air at the outlet of the air turbulence mill was circa 90°C.

The moisture of the particles after drying and grinding was about 5%. The color was homogeneously cream to light brown.

The in-vitro pepsin digestibility (pepsin concentration of 0.02% in hydrochloric acid) of the Total Nitrogen Matter and the Ileal (Boisen) digestibility of the dried products were measured and are reported in the table below.

| | | | | | |
|---|---|---|---|---|---|
| Residual moisture content of the semi-dried product | % | 51,1 | 46,8 | 40,8 | 38,3 |
| Pepsic Digestibility @ 0,02% pepsin | % | 81,7 | 81,6 | 81,1 | 83,2 |
| Ileal / Boisen Digestibility | % | 90,3 | 89,2 | 90,5 | 90,2 |

From this table, it is clear that the pre-drying in the hydrolyzer which can be considered a rotary paddle mixer had no impact on the pepsic and ileal digestibility of the product which was further dried in the air turbulence mill.

### EXAMPLE 2

The same procedure than in Example 1 was repeated except that the set point of the hydrolyzing pressure was increased to 2.9 bar rel. The in-vitro pepsin digestibility (pepsin concentration of 0.02% in hydrochloric acid) of the Total Nitrogen Matter and the Ileal (Boisen) digestibility of the dried products were measured and are reported in the table below and results confirm the results from Example 1 that the pre-drying in the hydrolyzer which can be considered a rotary paddle mixer had no impact on the pepsic and ileal digestibility of the product which was further dried in the air turbulence mill.

| | | | | | |
|---|---|---|---|---|---|
| Residual moisture content of the semi-dried product | % | 50,2 | 43,7 | 42,4 | 42,0 |
| Pepsic Digestibility @ 0,02% pepsin | % | 88,1 | 88,6 | 89,0 | 89,5 |
| Ileal / Boisen Digestibility | % | 90,7 | 91,0 | 91,2 | 91,9 |

### EXAMPLE 3

In a continuous horizontal hydrolyzer, working at 5 bar rel. and saturated steam, feathers from chicken with a moisture content of 65 wt% were treated for circa 25 min. The partly hydrolyzed keratinaceous material was brought to atmospheric pressure through a flash decompression vessel, and the fibrous mass contained about 55% of water, while being at a temperature of 95 °C.

The partly hydrolyzed feathers were dried in a disc dryer to about 80% solids. The particles leaving the disc dryer were a mixture of fine particles up to coarse particles of up to 1 cm, with about 20 wt% of particles larger than 2 mm.

This pre-dried product was further dried with an air turbulence mill. The inlet temperature of the air in the air turbulence mill was about 180°C, as the semi-dried feed had been left standing and had cooled down. The amount of gas was between about 15 and 30 m³/hr^{∗}kg.

The average residence time of the product was estimated to be about about 1 sec. During concurrent drying and grinding, the product did not reach temperatures higher than about 80 °C.

The moisture of the particles after drying and grinding was about 6%. The in-vitro pepsin digestibility (pepsin concentration of 0.02% in hydrochloric acid) of the Total Nitrogen Matter was 85 % or higher, the ileal (Boisen) digestibility was 92%. The color was homogeneously cream to light brown.

## Claims

1. Method for producing highly digestible, partly hydrolyzed keratinaceous material, preferably from feathers, hair, wool, hooves or nails, comprising the steps of:
(1) hydrolyzing keratinaceous material in the presence of water, in a hydrolyzer with heat and at a pressure between about 2 bar and about 100 bar to obtain a partly hydrolyzed keratinaceous material;
(2) pre-drying the partly hydrolyzed keratinaceous material of step (1) to obtain a semi-dried partly hydrolyzed keratinaceous material having a solids content of about 50wt% or higher, preferably between 60-85wt%; and
(3) concurrently drying and grinding the semi-dried partly hydrolyzed keratinaceous material of step (2) in an air turbulence mill, at about atmospheric pressure to obtain dried partly hydrolyzed keratinaceous material;
wherein preferably steps (2) and (3) are carried out such that the drop in pepsin and/or ileal digestibility caused by steps (2) and (3) is less than 10%, and/or the pepsin and ileal digestibility of the dried partly hydrolyzed keratinaceous material is higher than respectively 75% and 80%; wherein the resultant dried partly hydrolyzed keratinaceous material comprises at least partly insoluble material, and wherein the average particle size of the dried partly hydrolyzed keratinaceous material (d50) leaving the air turbulence mill is between 20 µm and 0.7 mm and the d90 is below 1 mm as measured with laser diffraction using a dry powder Beckman Coulter particle size analyzer.

2. The method according to claim 1 wherein concurrently drying and grinding the semi-dried partly hydrolyzed keratinaceous material of step (3) in an air turbulence mill is performed at a temperature such that the keratinaceous material remains at a temperature below about 90 °C, preferably below about 80 °C.

3. The method according to any one of the preceding claims, wherein the pre-drying of step (2) is performed using conventional drying equipment, including surface contact dryers also referred to as agitated contact dryers such as rotary disc dryers, rotary paddle dryers, rotary tube bundle dryers, drum dryers, agitated pan dryers and operated at atmospheric conditions or under vacuum , or a hot air dryer such as a fluidized bed dryer, a ring type dryer, a rotating drum dryer, and/or a belt dryer, preferably a disc dryer operating at atmospheric conditions or under vacuum.

4. The method according to any one of the preceding claims, wherein the air turbulence mill of step (3) comprises a chamber with appropriate inlets and outlets for product and stream(s) of gas in which a rotating member is mounted with stacks of impacting devices which rotating member can rotate at high speed, and wherein preferably the inner walls of the stator are lined with impacting members, wherein the rotating member rotates at a tip speed between 20-150 m/s.

5. The method according to any one of the preceding claims, wherein the dried partly hydrolyzed keratinaceous material has a homogeneous creamy light color as measured using the CIE L^{∗}a^{∗}b color space, wherein the (L) value of the keratinaceous material is about 50 or higher, preferably 54 or higher, and more preferably about 60 or higher, and/or wherein the (b) value is about 10 or higher, preferably about 12 or higher, and more preferably about 14 or higher.

6. The method according to any one of the preceding claims, wherein the dried partly hydrolyzed keratinaceous material has an average particle size (d50) of between about 20 µm and about 0.5 mm measured by laser diffraction using a dry powder Beckman Coulter particle size analyzer, preferably of between about 50 µm and about 300 µm.

7. The method according to any one of the preceding claims, wherein the dried and ground digestible keratinaceous material has a d90 divided by d10 of about 20 or less, preferably of about 15 or less.

8. The method according to any one of the preceding claims, wherein the dried and ground digestible keratinaceous material leaving the air turbulence mill has a poured density of about 0.2 g/cm³ or higher, preferably of about 0.25 g/cm³ or higher.

9. The method according to any one of the preceding claims, wherein the dried and ground digestible keratinaceous material as leaving the air turbulence mill has a tapped bulk density of about 0.25 g/cm³ or higher, preferably of about 0.3 g/cm³ or higher, even more preferably about 0.35 g/cm³ or higher.

10. The method according to any one of the preceding claims wherein a blood product, such as whole blood, clotted blood (e.g. steam coagulated blood), dried blood meal, semi-dried blood meal or other blood fractions, is fed into the conventional drying equipment of step (2) together with the partly hydrolyzed keratinaceous material obtained in step (1), wherein the relative amount of blood and keratinaceous material based on dry weight is between about 10-50 wt% blood and about 50-90% keratinaceous material.

11. The method according to any one of the preceding claims wherein a blood product, such as whole blood, clotted blood (e.g. steam coagulated blood), dried blood meal, semi-dried blood meal or other blood fractions, is fed into the air turbulence mill of step (3) together with the semi-dried partly hydrolyzed keratinaceous material obtained in step (2), wherein the relative amount of blood and keratinaceous material based on dry weight is between about 10-50 wt% blood and about 50-90% keratinaceous material.

12. The method according to any one of the preceding claims wherein the resultant dried keratinaceous material with or without blood has a pepsin and/or ileal digestibility higher than about respectively 80% and 90%, more preferably higher than about respectively 82% and 92%.

13. Use of the dried partly hydrolyzed keratinaceous material according to any one of the preceding claims as feed and/or feed additive, like in pet food or for aquaculture feed, or in cosmetics, as carrier and/or extender for pet food and feed palatants.

14. A method of retrofitting a keratinaceous material processing line, such as a feather meal processing line, by adding to its existing conventional drying equipment an air turbulence mill with its ancillary equipment, preferably wherein said keratinaceous material processing line comprises a hydrolyzer.

15. A keratinaceous material processing line, such as a feather meal processing line comprising:
(i) a hydrolyzer;
(ii) a conventional dryer; and
(iii) an air turbulence mill;
wherein the hydrolyzer and the conventional dryer are arranged such that at least part of, preferably all of, the output of the hydrolyzer can be fed to the conventional dryer, and wherein the conventional dryer and the air turbulence mill are arranged such that at least part of, preferably all of, the output of the conventional dryer can be fed to the air turbulence mill.
